# EUROPEAN PATENT APPLICATION

(11) **EP 1 577 633 A1**
(43) Date of publication of application: **21.09.2005**
(21) Application number: 03786286.9
(22) Date of filing: 24.12.2003
(51) Int. Cl.: F42B 3/12, B60R 22/46, B60R 21/26

(54) **GAS PRODUCER**

(30) Priority: 25.12.2002 JP 2002374828
(71) Applicant: NIPPON KAYAKU KABUSHIKI KAISHA, Tokyo 102-8172 (JP)
(72) Inventor: KUBO, Dairi, Himeji-shi, Hyogo 670-0893 (JP); KURITA, Kazumasa, NIPPON KAYAKU KABUSHIKI KAISHA, Himeji-shi, Hyogo 679-2123 (JP)
(74) Representative: Intes, Didier Gérard André
(86) International application number: PCT/JP2003/016628
(87) International publication number: WO 2004/059239

(57) **Abstract**

A gas generator comprising a cup member (3) loading therein with gas generant (2) to generate gas by burning, at least two electrode pins (4) to permit passage of electricity, an ignition portion (20) having an ignition mechanism to ignite by an application of electric current, and a holder (5) to fix the electrode pins (4) and the ignition portion (20) in place and engage with the cup member (3) to seal off the gas generant (2), wherein holes (23) for the electrode pins (4) to be extended through are formed in the holder (5) and plastic members (6) are arranged around a part of a radial periphery of the respective electrode pins (4), and wherein a part of or a whole of the plastic members (6) are inserted in the holes (23) and the holder (5) is plastically deformed at a portion thereof at which the plastic members (6) are inserted, whereby the electrode pins (4) and the plastic members (6) are fixed.

## Description

### Technical Field

The present invention relates to a gas generator, particularly related to a gas generator suitably used for operating a vehicle occupant restraint system, as an automobile seatbelt pretensioner and the like.

### Background Art

The seatbelt pretensioner is known as one of the safety systems to protect a vehicle occupant from the shock in a car collision. The seatbelt pretensioner operate on a large amount of high-temperature and high-pressure gas produced from the gas generator, for the protection of the vehicle occupant. The gas generator includes an igniter device and gas generant and is structured so that when a car collision happens, the igniter ignites and burns the gas generant, so as to generate the large amount of gas rapidly.

FIG. 15 shows an example of a conventional gas generator of JP Unexamined Laid-open Patent Publication No. 2000-260815. The gas generator 101 of FIG. 15 comprises a cup member 103 packed with gas generant 102, an igniter device 105 including a cylindrical case 105g containing a secondary charge 105a, and a holder 106 which holds the igniter device 105 and the cup member 103 by crimping, to seal off the gas generant 102. In the igniter device 105, two electrode pins 105d standing to allow passage of electric current through them under signals from sensors, not shown, are integrally molded in a body 105b of resin. A bridge wire 105f is extended between tip ends of the electrode pins 105d and is covered with a primary charge 105c formed and arranged to contact with the secondary charge 105a. The holder 106 is assembled in the seatbelt pretensioner. The gas generator is produced from material, such as iron and aluminum, to be prevented from being scattered by an internal pressure of the gas generator when operated. The cup member 103 is configured in a shouldered form having a diameter-expansion portion larger than a bottom portion thereof.

The igniter device 105 is fixed to the holder 106 by crimping, together with an O-ring 110, in order to prevent moisture entraining from outside. Further, a shorting clip 108, which allows the electrode pins 105d of the igniter device 105 to be shorted so as to prevent unintentional operation that may be caused by static electrical charge and the like, is fitted in the holder 106.

When the gas generator 101 gets signals from sensors, not shown, the primary charge 105c in the igniting device 105 is fired, first; then, the secondary charge 105a is ignited by the firing of the primary charge; and then the flame from the secondary charge causes the ignition and burning of the gas generant 102, thereby producing a large amount of gas rapidly.

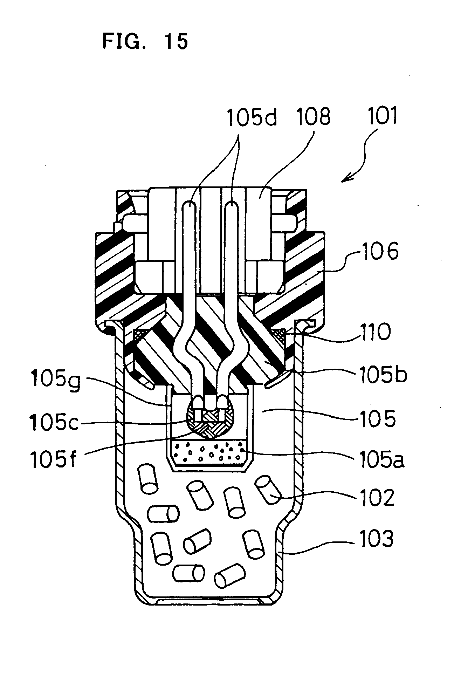

As shown in FIG. 15, in the conventional gas generator 101, the resin body 105b and the electrode pins 105d of the igniter device 105 are integrally molded and also the electrode pins 105d are deformed in the body 105d, to prevent the electrode pins dropped from the body easily.

However, when the gas generator 101 is put in a high-temperature state, for example a vehicle fire and the like, the resin body of the igniter device may be softened by the heat from the vehicle fire. When the gas generant is burnt under such a condition, there is a possibility that the electrode pins in the body may be burst forth.

Also, since the electrode pins 105d are insert-molded to integrate pins 105d and the body 105b for each igniter device, there is a limit to reduction of the production costs. In addition, since the resin body 105b and the electrode pins 105d are integrally molded, it is hard to improve in the sealing property against the moisture and the like.

### Disclosure of the Invention

It is an object of the present invention to provide a gas generator having the structure that can provide electrical insulation of an interface between a holder and electrode pins via resin and can provide improvement in the sealing property against moisture and the like by a low-cost production method. It is another object of the present invention to provide the structure of the gas generator that can make it hard for the electrode pins to burst forth even when the gas generator is operated under high temperature.

In order to solve the problem mentioned above, the present invention provides a gas generator comprising a cup member loading therein with gas generant to generate gas by burning, at least two electrode pins to permit passage of electricity, an ignition portion having an ignition mechanism to ignite by an application of electric current, and a holder to fix the electrode pins and the ignition portion in place and engage with the cup member to seal off the gas generant, wherein holes for the electrode pins to be extended through are formed in the holder, and plastic members are arranged around at least a part of a radial periphery of the respective electrode pins, and wherein a part of or a whole of the plastic members are inserted in the holes and the holder is plastically deformed at a portion thereof at which the plastic members are inserted, whereby the electrode pins and the plastic members are fixed.

According to this construction, since the plastic members are arranged around the respective electrode pins and are fixed by deforming the holder plastically, the volume occupied by plastic material can be reduced and also the sealing property can be improved by fixing the electrode pins individually. Also, since the volume occupied by plastic material is reduced, the gas generator can be made to have the structure that can make it hard for the electrode pins to burst forth even when the gas generator is operated under high temperature, as compared with a conventional structure.

Hence, the present invention can provide a gas generator that can provide improvement in the sealing property against moisture and the like by a low-cost production method. Also, the present invention can provide the structure of the gas generator that can make it hard for the electrode pins to burst forth even when the gas generator is operated under high temperature.

In the gas generator of the present invention, it is preferable that the electrode pins are deformed at the other end portions thereof on the side projecting toward the cup member so as to make the electrode pins to be pulled off hard toward one end portions thereof on the side of a connector of the holder.

This construction can provide the structure that can make it hard for the electrode pins to be pulled out from the gas generator by deforming the electrode pins at the other ends thereof on the side projecting toward the cup member by bending or pressing them.

In the gas generator of the present invention, it is preferable that the ignition portion comprises at least electric conductors for permitting passage of electricity, a joining portion for joining together the electric conductors, a heating element for converting an electric signal to heat, and a primary charge formed around the heating element and is fixed to the other end portions of the electrode pins.

This construction can provide the result that the just only ignition portion can be separately produced in large quantities. This can permit the ignition portion to be fixed to the holder from which the electrode pins stand at a later stage. This leads to reduction of the production cost.

It is preferable that the gas generator of the present invention comprises a secondary charge which is ignited by flames of the ignition portion ignited and in turn causes the gas generant to be ignited, and a secondary charge holder containing the secondary charge, wherein the position of the ignition portion is fixed by a fit of the joining portion with the secondary charge holder.

This construction can permit the reliable positioning of the ignition portion and thus can prevent the primary charge in the ignition portion from being flaked away due to vibration and the like.

In the gas generator of the present invention, it is preferable that a combustion chamber formed in the secondary charge holder is arranged eccentrically with respect to a central axis of the gas generator.

This construction can make the good use of a radial space of the interior of the gas generator to arrange the ignition portion, without being projected toward the gas generant side with respect to an axial direction of the gas generator, as conventional, thus providing an increased effective volume to contain the gas generant.

In the gas generator of the present invention, it is preferable that a rigid cap is integrally molded with the secondary charge holder.

This construction can provide the structure that can prevent the secondary charge holder from being burst until an inner pressure of the secondary charge holder reaches a predetermined pressure. This can allow the flames from the secondary charge to be spouted directionally, and as such can allow the gas generant in the holder to be ignited reliably and effectively by the flames from the secondary charge.

### Brief Description of the Drawings

FIG. 1 is an axial sectional view of a first embodiment of a gas generator of the present invention.
FIG. 2 is an axial sectional view of the same as viewed from a position shifted 180 degrees with respect to the position of FIG. 1.
FIG. 3 is a sectional view of the same taken along line A-A' in FIG. 2 as viewed from an axial top thereof.
FIG. 4 is an enlarged view of a plastic member 6 of the gas generator of the present invention, illustrating a fixing method of the plastic member 6.
FIG. 5 is an axial sectional view of a second embodiment of the gas generator of the present invention.
FIG. 6 is an axial sectional view of the same as viewed from a position shifted 180 degrees with respect to the position of FIG. 5.
FIG. 7 is a sectional view of the same taken along line B-B' in FIG. 6 as viewed from an axial top thereof.
FIG. 8 is an axial sectional view of a third embodiment of the gas generator of the present invention.
FIG. 9 is an axial sectional view of the same as viewed from a position shifted 180 degrees with respect to the position of FIG. 8.
FIG. 10 is a sectional view of the same taken along line C-C' in FIG. 9 as viewed from an axial top thereof.
FIG. 11 is an axial sectional view of a fourth embodiment of the gas generator of the present invention.
FIG. 12 is an axial sectional view of the same as viewed from a position shifted 180 degrees with respect to the position of FIG. 11.
FIG. 13 is a sectional view of the same taken along line D-D' in FIG. 12 as viewed from an axial top thereof.
FIG. 14 is a view showing an example of the formation presented when ignition portions of the gas generator of the present invention are produced successively.
FIG. 15 is an axial sectional view of a conventional gas generator.

### Best Mode for Carrying out the Invention

### [First embodiment]

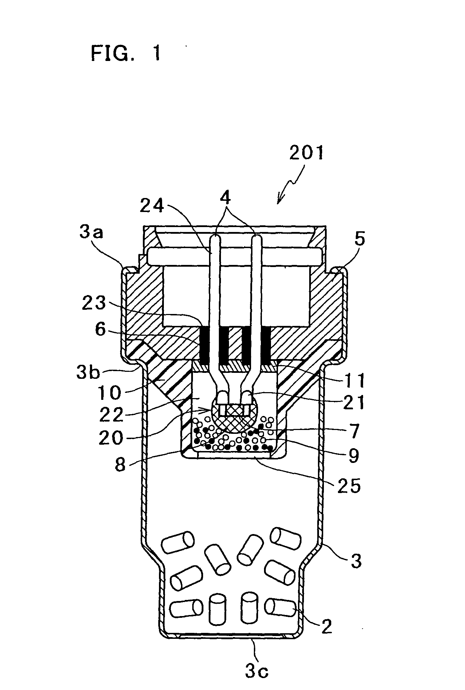

A first embodiment of a gas generator of the present invention will be described with reference to FIGS. 1 to 4.

In FIG. 1, a gas generator 201 of this embodiment comprises a cup member 3 packed with gas generant 2 to generate gas by the burning, and an ignition portion 20 which includes a pair of electrode pins 4 arranged in parallel and having a heating element 7 at the other ends thereof 21 on the side projecting toward the cup member 3, and a primary charge 8 formed to cover the heating element 7 and which is fixed to the holder 5. A pad 11 is arranged at root portions of the electrode pins 4 on the other side 21, for preventing the secondary charge 9 being accidentally ignited by a spark caused by static electrical charge and the like.

A secondary charge holder 10 is sandwiched between the holder 5 and a diameter-reduction portion 3b of the cup member 3. In the secondary charge holder 10, the ignition portion 20 and a combustion chamber 22 containing the secondary charge 9 are formed, and the secondary charge 9 is arranged around the primary charge 8.

The holder 5 is in a generally closed-end cylinder form and has two holes 23 for allowing the electrode pins 4 to be extended and fixed. Plastic members 6 are placed between the electrode pins 4 and the holder 5. The holes 23 of the holder 5 are plastically deformed to be reduced in diameter, whereby the holder 5 is crimped onto the peripheries of the plastic members 6 at both one end and the other end thereof. This can allow the electrode pins 4 and the plastic members 6 to be fixed to the holder 5.

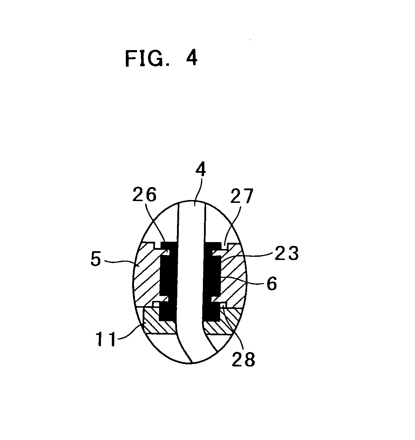

Shown in FIG. 4 is an enlarged view of fixation of the plastic member 6. As shown in FIG. 4, the electrode pins 4 are inserted in the holes of the columnar plastic members 6, and the plastic members 6 are profiled with concavities 26 around the peripheries of the electrode pins 4 and are inserted in the holes 23 of the holder 5. The holder 5 is plastically deformed by applying pressure to around the holes 23 of the holder 5 from an axial direction of the plastic members 6 using a pressing instrument (not shown), so that pressurized portions 27 plastically deformed to correspond in shape to the pressing instrument are formed around the holes 23 of the holder 25. This causes plastic deformation of the holes 23 of the holder 5 and partly shrinking of the holes 23, which forces part of walls of the holes 23 of the holder 5 to be intruded into the concavities 26 of the plastic members 6, thereby forming a joining portion therebetween. Thus, the electrode pins 4 and the plastic members 6 are fixed to the holder 5 by crimping.

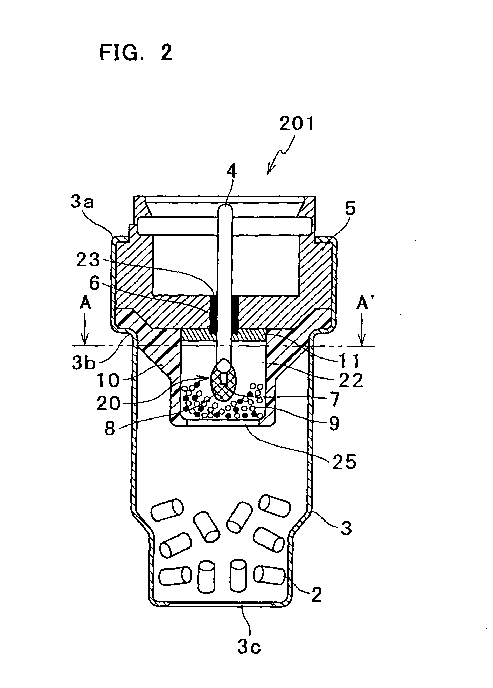

The holder 5 and the cup member 3 are fixed together by crimping an opening portion 3a of the cup member 3 onto the holder 5 radially inwardly, as shown in FIGS. 1 and 2. The cup member 3 has a plurality of linear notches in the bottom 3c. When the gas generant 2 packed in the cup member 3 is burnt, the notches formed in the bottom 3c are broken to release the generated gas therefrom.

The holder 5 and the cup member 3 are formed of metal, such as iron, stainless steel, aluminum, copper, and brass. Usually, the holder 5 and the cup member 3 can be formed by pressing, casting, forging or cutting these metals.

The secondary charge holder 10 is formed by injecting material of glass fibers, carbons, and the like mixed in resin, such as, for example, polybutylene terephthalate, polyethylene terephthalate, NYLON-6, NYLON-66, polyphenylene sulfide, polyphenylene oxide, polyethylene imide, polyether imide, polyether ether ketone, and polyether sulfone, into a molded resin, not shown.

Each plastic member 6 is in a short-cylinder form having a through hole. Among the materials that may be used for the secondary charge holder 10, polyether imide, polyether ether ketone and polyether sulfone are particularly preferably used for the plastic members 6 in terms of excellence in sealing property and heat resistance.

The electrode pins 4 are made of conductive material, such as, for example, stainless steel, carbon steel, and ferronickel, and are plated with gold and the like. The electrode pins 4 are electrically insulated with the holder 5 by the plastic members 6.

The one end portions 24 of the electrode pins 4 projecting toward the connection side of the holder 5 of the gas generator 201 are fitted with a shorting clip (not shown) for short-circuiting the electrode pins 4, in order to prevent accidental operation caused by static electricity and the like. The shorted state of the electrode pins is released when the gas generator is assembled in the seatbelt pretensioner and the like.

The gas generant 2 used in the gas generator 201 of this embodiment is packed in the interior of the cup member 3 without any intermediary of filter and/or coolant. It is to be noted here that although conventional smokeless powders can be used as the gas generant, the gas generant comprising a nitorogen-containing organic compound as a fuel component, an inorganic compound as an oxidizing agent component, and at least one additive may be preferably used. Specifically, the fuel components that may be used include at least one material selected from the group consisting of aminotetrazole, guanidine nitrate, and nitroguanidine. The oxidizing agent components that may be used include at least one material selected from the group consisting of strontium nitrate, ammonium nitrate, potassium nitrate, ammonium perchlorate, potassium perchlorate, and basic copper nitrate. The additives that may be used include silicon dioxide, silicon nitride, molybdenum trioxide, talc, clay, and silane coupling agent. In addition to these, a binder can also be cited as the additive to be added to the gas generant. The binders that may be used include at least one material selected from the group consisting of guar gum, methyl cellulose, carboxymethyl cellulose, water-soluble cellulose ether, polyethylene glycol, and polyacrylamide. Gas generant comprising 5-aminotetrazole and guanidine nitrate as the fuel component, strontium nitrate and ammonium perchlorate as the oxidizing agent component, and polyacrylamide as the binder can be cited as a preferable combination of the gas generant. Further, gas generant comprising 10-30weight% 5-aminotetrazole and 10-35weight% guanidine nitrate as the fuel component, 10-35weight% strontium nitrate and 15-35weight% ammonium perchlorate as the oxidizing agent component, 1-10weight% polyacrylamide as the binder can be cited as a further preferable gas generant.

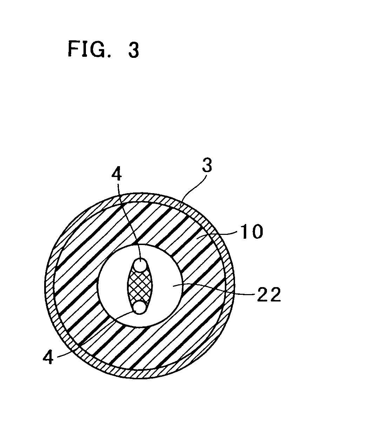

Shown in FIG. 3 is a view of the gas generator taken along line A-A' in FIG. 2 as viewed from an axial top thereof.

Now, operation of the gas generator 201 will be described. When automobile collision is detected by a collision sensor, not shown, the electric current passes through the electrode pins 4. Then, the heating element 7 generates heat and thereby the primary charge 8 is ignited. Sequentially, the ignition of the primary charge 8 causes the ignition and burning of the secondary charge 9. As the burning of the secondary charge 9 proceeds, the interior of the combustion chamber 22 of the secondary charge holder 10 is increased in temperature and pressure. Then, a flow of high-temperature heat is spouted from a preformed brittle portion 25 formed by the notches, then causing the ignition and burning of the gas generant 2. A large amount of gas generated in the cup member 3 by the burning of the gas generant 2 increases the inner pressure of the cup member 3 rapidly, leading eventually to the burst open of the notches formed in the bottom of the cup member 3 to discharge the gas therefrom.

Next, the production method of the gas generator 201 will be described. First, a prescribed amount of gas generator 2 is measured and then packed in the cup member 3. Then, the secondary charge holder 10 is fitted in the diameter-reduction portion 3b of the cup member 3 and, thereafter, a prescribed amount of enhancer 9 is packed in the combustion chamber 22 of the secondary charge holder 10. Then, after the electrode pins 4 are fitted in the plastic members 6, respectively, the plastic members 6 are inserted in the holes 23 of the holder 5 through the pad 11. Then, the plastic members 6 are crimped so that the holes 23 can be deformed plastically and reduced in diameter. The electrode pins 4, the plastic members 6 and the pad 11 are fixed to the holder 5 in this manner. Then, the heating element 7 is connected to the tip ends of the electrode pins 4 on the other side thereof 21 and then is covered with the primary charge 8. The holder 5 having the ignition portion 20 thus formed is inserted in the cup member 3. At this time, the ignition portion 20 is inserted into the secondary charge holder 10 in alignment therewith. Then, the opening portion 3a of the cup member 3 is crimped in a diameter-reduction direction, to fixedly join the holder 5 and the cup member 3. Finally, the shorting clip, not shown, is fitted.

### [Second embodiment]

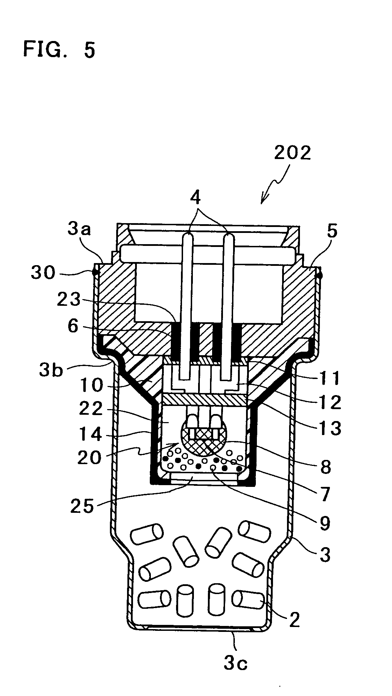

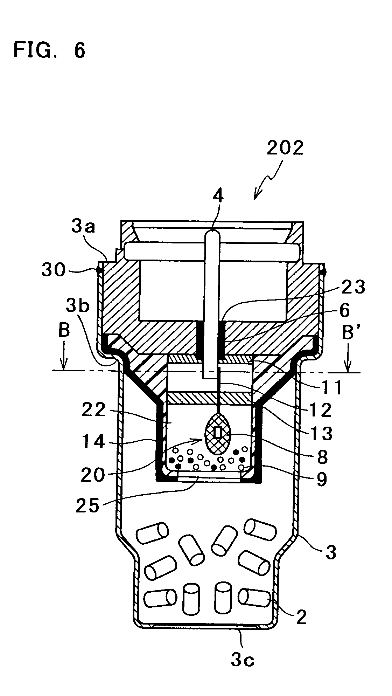

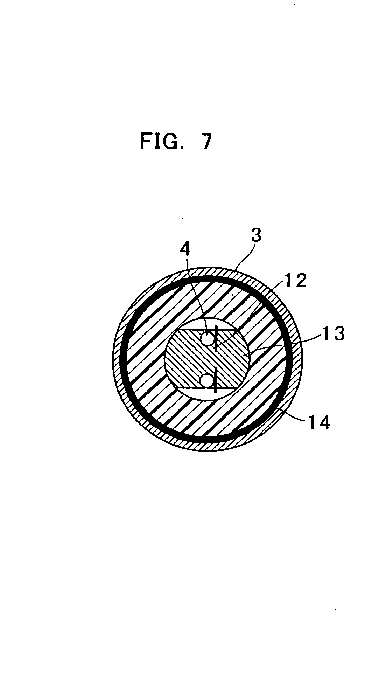

A second embodiment of the gas generator of the present invention will be described with reference to FIGS. 5 to 7. In this embodiment, common parts to those of the gas generator 201 of the first embodiment as described above are labeled by the same reference numerals and characters and the detailed description thereon is omitted.

One of the differences of a gas generator 202 of this embodiment shown in FIGS. 5-7 from the gas generator 201 of the first embodiment shown in FIGS. 1-4 is in that the ignition portion 20 comprises electric conductors 12 for allowing passage of electricity, a joining portion 13 for joining together the electric conductors 12, a heating element 7 for converting electric signals to heat, and a primary charge 8 formed around the heating element 7. The electric conductors 12 and the electrode pins 4 are fixed together by welding, crimping, soldering, brazing, or other proper means. Another difference of the gas generator 202 from the gas generator 201 of the first embodiment is in that there is provided a cap 14 to cover the outside of the secondary charge holder 10 on the gas generant side.

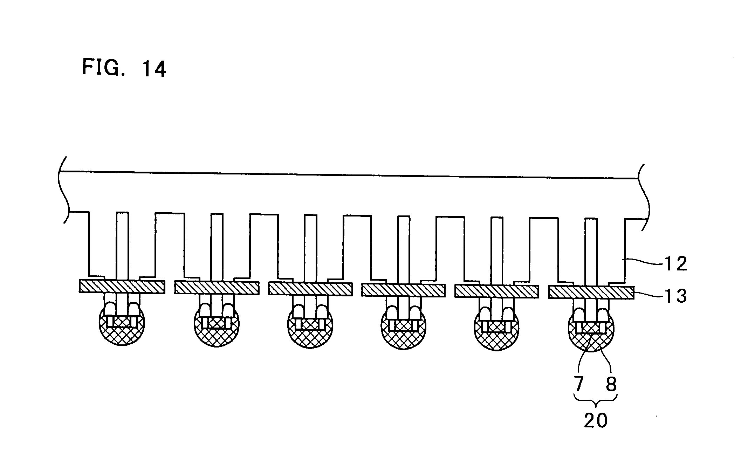

It is to be noted here that conductive material, such as, for example, stainless steel, carbon steel, and ferronickel, is used for the electric conductor 12 and that non-conductive material such as plastic material is used for the joining portion 13. In this embodiment, the ignition portion 20 is formed separately from the electrode pins 4. This can provide the result that only the ignition portions 20 can be produced in succession, as shown in FIG. 14, thus leading to significant reduction of the production cost.

The joining portion 13 provided in the ignition portion 20 is formed to keep the space between the electric conductors 12 constant and have a corresponding shape to an internal shape of the combustion chamber 22 of the secondary charge holder 10. This can permit the positioning of the ignition portion 20 in the secondary charge holder 10. Thus, the primary charge 8 in the ignition portion 20 can be prevented from being flaked away due to vibration and the like.

Also, in the gas generator 202 of this embodiment, the cap 14 is provided to cover the outside of the secondary charge holder 10 on the gas generant side. The secondary charge holder 10 is preferably in the form of being molded to be integral with the cap 14. In detail, the secondary charge holder 10 is molded in an injection molding process in which the cap 14 is inserted in the mold. The materials that may be used for the cap 14 include metal, such as iron, stainless steel, aluminum, copper, and brass. Usually, the cap 14 can be obtained by forming the metal into the cap shape in a pressing process, a casting process, a forging process, or a cutting process. The flames of the secondary charge 9 burnt in the interior of the gas generator 202 are spouted to the gas generant 2 directionally through the brittle portion 25 formed in a bottom of the cap 14 or in a side surface of the same. This can allow the gas generant 2 to be ignited reliably and effectively by the flames of the secondary charge 9.

In the gas generator 202 of this embodiment, the cup member 3 is fixed to the holder 5 at the opening portion 3a of the cup member 3 by welding 30. This can provide a further reliable sealing of the packed gas generant 2.

### [Third embodiment]

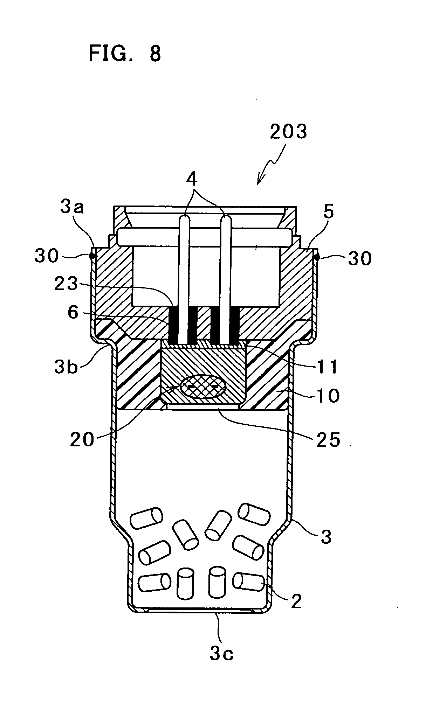

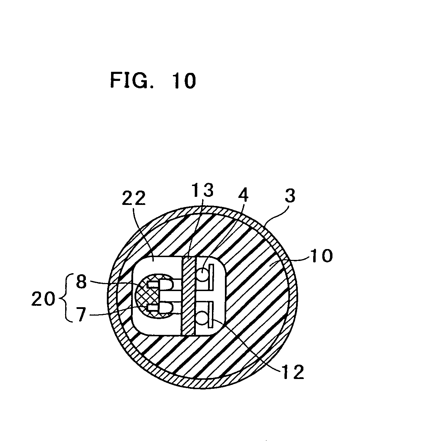

Next, a third embodiment of the gas generator of the present invention will be described with reference to FIGS. 8 to 10. In this embodiment, common parts to those of the gas generators 201, 202 of the first and second embodiments as described above are labeled by the same reference numerals and characters and the detailed description thereon is omitted.

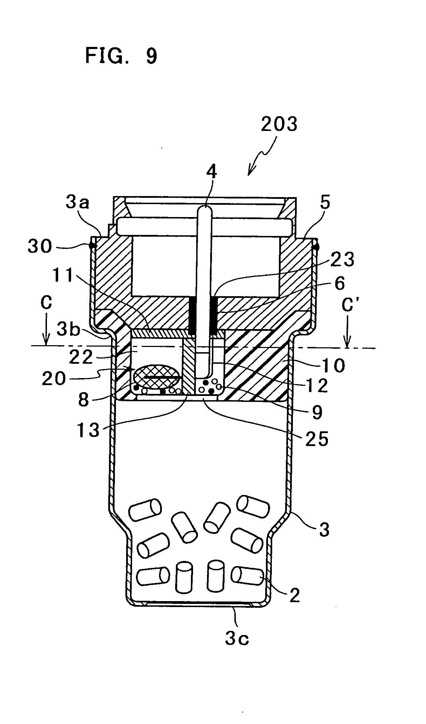

One of the differences of a gas generator 203 of this embodiment shown in FIGS. 8-10 from the gas generator 202 of the second embodiment shown in FIGS. 5-7 is in that the combustion chamber 22 formed in the secondary charge holder 10 is arranged eccentrically with respect to a central axis of the gas generant 2. In this embodiment, the electric conductors 12 of the ignition portion 20 are fixed to the electrode pins 4 in the state of being bent into a 90°angle (See FIG. 9). This can make the good use of a radial space of the interior of the gas generator 203 to arrange the combustion chamber 22, thus providing an increased effective volume to contain the gas generant 2. Another difference is in that the cap 14 is not provided in the gas generator of this embodiment.

### [Fourth embodiment]

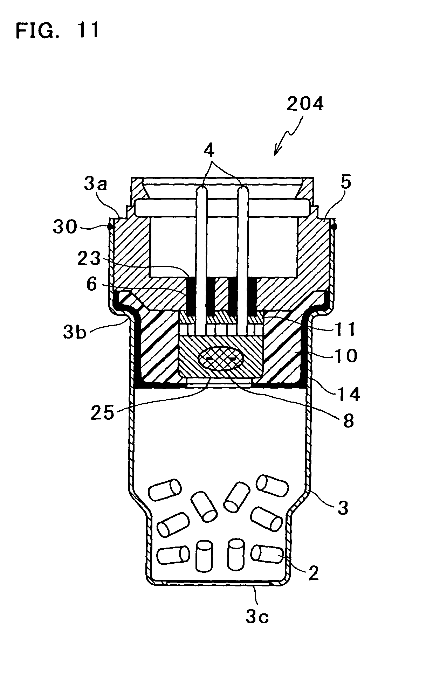

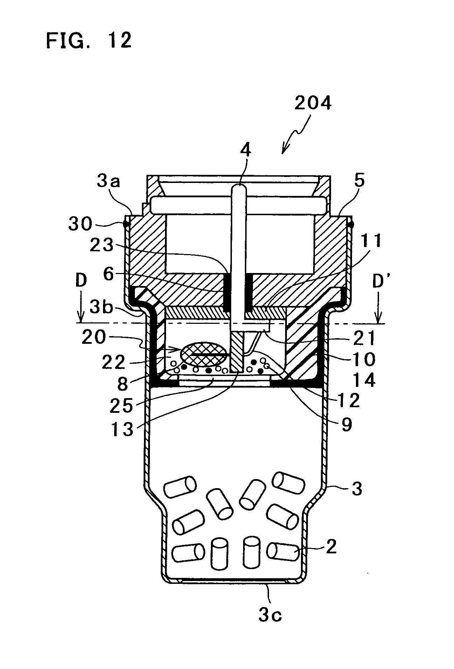

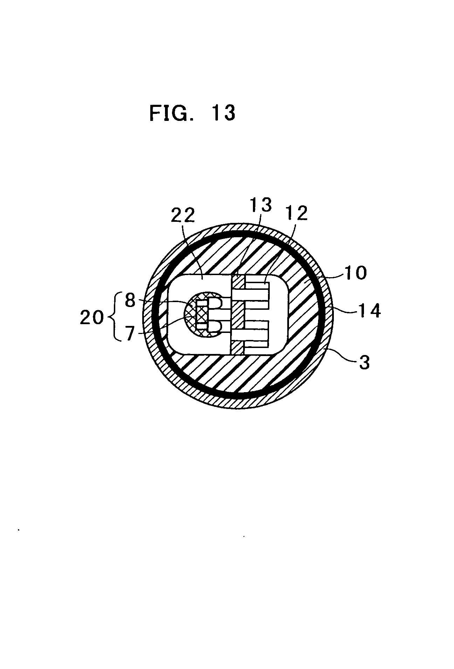

Next, a fourth embodiment of the gas generator of the present invention will be described with reference to FIGS. 11 to 13. In this embodiment, common parts to those of the gas generator 203 of the embodiment described above are labeled by the same reference numerals and characters and the detailed description thereon is omitted.

One of the differences of a gas generator 204 shown in FIGS. 11-13 from the gas generator 203 of the third embodiment shown in FIGS. 8-10 is in that the electrode pins 4 are fixed to the ignition portion 20 in the state of being deformed at the other end 21 (being bent into a 90° angle). This can provide the structure that can make it hard for the electrode pins 4 to be dropped out of the gas generator 204. Another difference is in that the cap 14 is provided in the gas generator of this embodiment..

Although the present invention has been illustrated above in the form of the preferred embodiments, the present invention is not exclusively limited thereto. It would be understood that various variants and modifications may be made without departing from the sprit and scope of the present invention.

## Claims

1. A gas generator comprising a cup member (3) loading therein with gas generant (2) to generate gas by burning, at least two electrode pins (4) to permit passage of electricity, an ignition portion (20) having an ignition mechanism to ignite by an application of electric current, and a holder (5) to fix the electrode pins (4) and the ignition portion (20) in place and engage with the cup member (3) to seal off the gas generant (2),
wherein holes (23) for the electrode pins (4) to be extended through are formed in the holder (5) and plastic members (6) are arranged around at least a part of a radial periphery of the respective electrode pins (4), and
wherein a part of or a whole of the plastic members (6) are inserted in the holes (23) and the holder (5) is plastically deformed at a portion thereof at which the plastic members (6) are inserted, whereby the electrode pins (4) and the plastic members (6) are fixed.

2. The gas generator according to Claim 1, wherein the electrode pins (4) are deformed at the other end portions thereof (21) on the side projecting toward the cup member (3) so as to make the electrode pins (4) to be pulled off hard toward one end portions thereof (24) on the side of a connecter of the holder (5).

3. The gas generator according to Claim 1, wherein the ignition portion (20) comprises at least electric conductors (12) for permitting passage of electricity, a joining portion (13) for joining together the electric conductors (12), a heating element (7) for converting an electric signal to heat, and a primary charge (8) formed around the heating element (7) and is fixed to the other end portions (21) of the electrode pins (4).

4. The gas generator according to Claim 3, comprising a secondary charge (9) which is ignited by flames of the ignition portion (20) ignited and in turn causes the gas generant (2) to be ignited, and a secondary charge holder (10) containing the secondary charge (9), wherein the position of the ignition portion (20) is fixed by a fit of the joining portion (13) with the secondary charge holder (10).

5. The gas generator according to Claim 1, comprising a combustion chamber (22) formed in the secondary charge holder (10) arranged eccentrically with respect to a central axis of the gas generator (2).

6. The gas generator according to Claim 1, comprising a rigid cap (14) integrally molded with the secondary charge holder (10).
